# EUROPEAN PATENT APPLICATION

(11) **EP 3 496 357 A1**
(43) Date of publication of application: **12.06.2019**
(21) Application number: 17206239.0
(22) Date of filing: 08.12.2017
(51) Int. Cl.: H04L 29/06, H04L 29/08, H04L 12/28

(54) **METHOD AND DEVICE FOR ENABLING INTEROPERABILITY BETWEEN NETWORKED IOT DEVICES IN HETEROGENEOUS NETWORKS**

(71) Applicant: Cork Institute Of Technology, T12 P928 Cork (IE)
(72) Inventor: FAROOQ, Muhammad Umer, Cork (IE); PESCH, Dirk, Co, Cork (IE); WHEELOCK, Ian, Cork City (IE)
(74) Representative: Purdylucey Intellectual Property

(57) **Abstract**

A gateway device is provided for enabling interoperability between networked devices operating under heterogeneous network protocols. The gateway comprises a networked device discovery and registration module, which instructs a communication stack to broadcast a discovery request message under its respective network protocol, receives resource data from networked devices in reply to the request, processes each received resource data into a network protocol-respective a universal resource identifier (URI) format, and stores each URI in a device information base. The gateway also comprises a translation module, which maps the network protocol-respective URI of a discovered resource to a URI format of each further network protocol supported by the gateway device and stores each such format mapping in its network protocol-respective URI mapping register, and translates heterogeneous data communications between networked devices by mapping source device application layer messages to destination device application layer messages according to the device information base and the URI mapping registers.

## Description

### Field of the Invention

The present invention relates to interoperability of networked devices operating under respective network protocols. More particularly, the present invention relates to a method, and to a device embodying the method, for enabling interoperability between data processing devices coexisting in heterogeneous data networks.

### Background to the Invention

The interoperability of network-connected devices and sensors is a technical concept, typically referred to as the 'Internet of Thing' ("IoT"), under which device and device data would be communicable, operable and programmable across all networks, regardless of device make, model, manufacturer or industry, resulting in an environment wherein, figuratively speaking, all of people, processes and things work with each other no matter what hardware type, screen type, browser or network connectivity variant is being used.

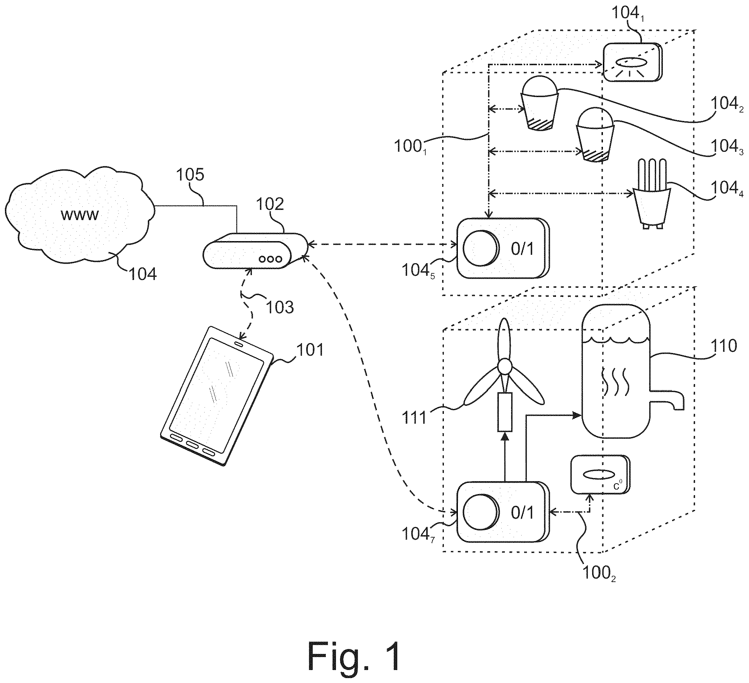

IoT implementation is still in its relative infancy and IoT systems which are currently gaining the widest public awareness are Home Automation Systems ("HASs"). With reference to Figure 1 herein, a HAS 100_{N} is typically built upon a legacy domestic network environment consisting of at least one personal computing device 101 connected to a router-modem device 102 over a wired or wireless (103) Local Area Network ("LAN") connection, wherein the router-modem interfaces the personal computing device 101 with the Internet 104 through a wired (105) or wireless Wide Area Network ("WAN") connection according to principles well-known to the skilled and lay person, and thus permits the connection of the personal computing device 101 with remote resources across the WAN, examples of which include remote user devices, servers and distributed storage and computing entities and services commonly referred to as the 'Cloud'.

The HAS system 100 itself consists of one or more control devices and/or sensors 104_{N}, wherein each such device and sensor 104_{N} has defined purpose(s) and/or performs defined task(s) within a domestic context, is network-connectable with the router-modem 102 and with other HAS device(s) and sensor(s) 104_{N} that are compatible with its network standard(s), and may be interacted with, at least for configuration purposes, through a set of instructions processed by a personal computing device 101_{N}.

Figure 1 shows two example HASs co-existing in a dwelling, with a first HAS 100₁ that includes a sensor 104₁ for detecting a user presence, user-configurable lights 104₂₋₄ and a light switch 104₅ used to selectively switch the lights 104₂₋₄ on or off according to a detection input from the sensor 104₁; and a second HAS 100₂ that includes a sensor 104₆ for sensing a temperature of the dwelling and a dwelling temperature controller 104₇ for selectively activating a heating boiler 110 or an air cooling unit 111 according to a temperature threshold detected by the sensor 104₆.

The network connectivity inherent to each of the above two examples HASs 100_{1,2} and with the modem-router 102 allows the user, through a HAS- and/or control device- and/or sensor- -respective set of instructions processed by their personal computing device 101, to configure parameters for e.g. the lights 104₂₋₄ (for instance their colour and/or brightness), for the presence sensor 104₁ (for instance, disable or enable and/or at specific times), for the switch 104₅ (for instance, randomize on and off switching during holidays to simulate user presence in the dwelling) and for the dwelling temperature controller 104₇ (set respective temperature thresholds for boiler and/or air conditioning activation) and/or activate same *ad hoc.* Moreover, typically the user is able to perform this interaction either locally, whilst in the dwelling through a LAN or WLAN connection to the modem-router 102, or remotely through a WAN connection to the modem-router 102.

However, the current reality of the IoT concept is, as illustrated in Figure 1, that the IoT is heavily fragmented, and so lacks actual interoperability. This fragmentation manifests as any one or more of devices or equipment that are not manufactured by a same party not being able to integrate or communicate with others; new devices incompatible with legacy devices of a same manufacturer or others through accidental or programmed obsolescence; different and incompatible types of connectors and/or connectivity frameworks; different or inconsistent communication protocol standards; lack of device or Application Programmer Interface ("API") openness, accessibility and/or programmability to improve interoperability.

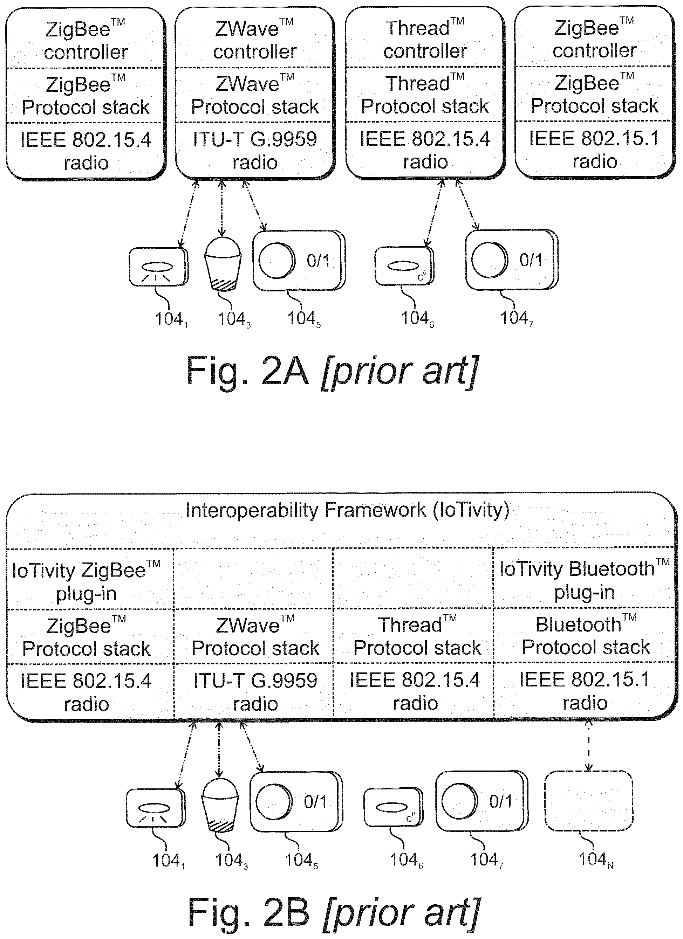

Factors inhibiting the development of IoT interoperability are held to include the inability to test APIs using common approaches and mechanisms, the inability to communicate bilaterally between devices using the same interfaces, the inability to monitor and manage devices using a common management and monitoring layer and the inability to secure devices using third-party security software. Adverting to these factors, and with reference to Figure 2A herein, interoperability workflows tend to still be heavily "siloed", i.e. wherein IoT devices are bound to network protocol-specific "silos" and can only communicate within their own network, such that there is no inter-network communication in an environment of heterogeneous networks: distinct IoT wireless technologies such as Z-Wave™, ZigBee™ and Thread™ co-exist, each of which implements its own standard at the physical networking layer with its own network protocol, and with reference to the example context of Figure 1, IoT systems such as the HASs 100_{1,2} of Figure 1 either consist exclusively of devices manufactured to a specific networking standard (e.g. Z-Wave™ devices 104₁₋₇ only, to the exclusion of ZigBee™ and Thread™ devices 104_{N}), or consist of discrete automated function-specific sub-networks (e.g. Z-Wave™ devices 104₁₋₅ for all lighting functions, Thread™ devices 104₆₋₇ for all dwelling temperature functions). From the point of view of the software developer, if a HAS application should be made compatible with one or more of the Z-Wave™, ZigBee™ and Thread™ standards, then APIs must be written directly for each selected standard into the application.

Nonetheless, achieving interoperability between IoT systems is considered to be economically critical, particularly as the technical basis underlying the benefits anticipated from the IoT, namely the intelligent use of IoT data, has yet to be realized due to the above-described fragmentation. By way of illustration, it is currently estimated that, on an oil rig which comprises tens of thousands of sensors, only approximately 1% of the data is examined, mostly to detect and control anomalies, rather than for optimization and prediction operation which provides the greatest economic value.

Much research is ongoing in the field and, with reference to Figure 2B now, the IoTivity project (http://www.iotivity.org) is indicative of the state of the art in the field, being an open source project aimed at achieving interoperability among different IoT communication devices and standards. The features provided by IoTivity include resource discovery, messaging, data management, resource encapsulation, resource container, device management, power management and security. IoTivity-based devices within the IoTivity framework can communicate with each other and with certain other non-Iotivity devices, even if the latter are using different hardware, operating systems, and communication standards, because IoTivity provides plug-ins to enable IoTivity-based devices to communicate with certain other non-IoTivity-based devices. Accordingly this framework somewhat reduces the segregating nature of legacy IoT silos illustrated in Figure 2A. But one of the main drawbacks of IoTivity's interoperability architecture however, is that this enhanced interoperability still remains framework-dependent: only IoTivity-based devices with relevant plug-ins can discover heterogeneous devices, i.e. non-IoTivity devices cannot discover heterogeneous devices in an IoTivity network, thus extending an interoperability framework using this plug-in approach cannot eliminate IoT silos completely, because devices 104_{N} based on different communication standards still cannot communicate with each other without using an interoperability framework. Moreover, the same problem remains for software developers, of having to use the IoTivity API when developing new applications. Consequently, IoTivity effectively constitutes its own silo, and does not fully mitigate the problem of multiple co-existing IoT networks.

Generally, the disadvantages of the state of the art in frameworks for IoT interoperability can be summarised as: the absence of a solution apt to fully eliminate the segregating principle of silos, the fact that any integration of existing HASs 100_{N} with a new framework requires substantial hardware and/or software changes to already-deployed ('legacy') devices 104_{N}, the fact that the development of data-processing instructions sets remains tributary of interoperability framework-respective APIs and, adverting to same, the fact that legacy data-processing instructions sets must be rewritten to incorporate such new interoperability framework-specific APIs.

Accordingly an improved interoperability framework is desired, which should overcome at least some of the shortcomings of the prior art introduced and summarised herein.

### Summary

The present invention mitigates shortcomings associated with the prior art of reference by providing a unified interoperability framework which bridges distinct network protocols and application layers through managed registers.

According to an aspect of the present invention therefore, there is provided a gateway device for enabling interoperability between networked devices operating under heterogeneous network protocols, comprising at least one memory that stores computer executable instructions ; and at least one processor configured to access the at least one memory, wherein the at least one processor is configured to execute the computer executable instructions to instantiate a networked device discovery and registration module ; a device information base ; and a translation module processing a plurality of mapping registers, including at least a universal resource identifier ("URI") mapping register for each network protocol supported by the gateway device. The networked device discovery and registration module configures the gateway device to instruct a communication stack to broadcast a discovery request message under its respective network protocol ; to receive network protocol-respective resource data from one or more networked device in reply to the discovery request message ; to process each received resource data into a network protocol-respective URI format; and to store each processed URI in the device information base. The translation module configures the gateway device to map the network protocol-respective URI of a discovered resource to a URI format of each further network protocol supported by the gateway device and store each such format mapping in its network protocol-respective URI mapping register; and translate heterogeneous data communications between networked devices by mapping source device application layer messages to destination device application layer messages according to the device information base and the URI mapping registers.

The co-existing modules, together with the device information base, the common-format identifier for each networked device acting as a index key and the network protocol-respective mapping registers, effectively implement a unifying and over-arching data communication framework which eliminates network protocol-respective silos, advantageously without requiring amendment or updating of the hardware or application set(s) of legacy or new networked devices, nor the amendment of applications interfacing such networked devices with their users, nor the learning and implementation of a new Application Programmer Interface ("API") by skilled persons.

The mapping of the network protocol-respective URI of a discovered resource to the URI format of each further network protocol supported by the gateway device advantageously allows seamless interoperation among smart home communication protocols, since it implements the on-boarding and commissioning of a networked device in a plurality of networks, beyond the one or more network(s) for which that device has built-in network protocol compatibility. This aspect of the framework of the invention provides further benefits in terms of interoperability, because networked device bindings can thus be created between and among networked devices belonging to different networks, regardless of their respective built-in communication technology and protocols, whereby any additional IoT device can be integrated with a legacy home automation system ("HAS") without requiring any change to that HAS or its legacy devices.

In an embodiment of the gateway device, the networked device discovery and registration module may further configure the gateway device to process network protocol-respective resource data that is received in a registration request message sent by a networked device, into a network protocol-respective URI format and to store the processed URI in the device information base. A variant of this embodiment may additionally store other supported communication standards and protocols URI mapping registers.

In a further or complementary embodiment of the gateway device, the networked device discovery and registration module may further configure the gateway device to receive a discovery request message sent by a networked device, to match the network protocol of the request against the device information base and network protocol-respective URI mapping register, and to answer the discovery request with matched resource data.

In an embodiment of the gateway device, the translation module further may configure the gateway device to translate a first data communication received from a first network device corresponding to a first resource request message, into a second data communication corresponding to a second resource request message compatible with the respective network protocol of a second network device supplying the queried resource ; translate a third data communication received from the second network device corresponding to a first resource reply message, into a fourth data communication corresponding to a second resource reply message compatible with the respective network protocol of the first network device ; and store a map comprising device information base data and URI mapping registers data processed to perform the translations.

In a variant of this embodiment, the first data communication received may be a resource state request message, the third data communication may be a resource state reply message, and the plurality of mapping registers may comprise an observer register in which the translation module stores the map. Alternatively, or additionally, the first data communication received may be a confirmable request message instead, whereby the third data communication may be a resource acknowledgement message and the plurality of mapping registers may further comprise a confirmable request register in which the translation module stores the map.

According to another aspect of the present invention, there is also provided a method for enabling interoperability between networked devices operating under heterogeneous network protocols, comprising the computer implemented steps of instantiating a device information base and a plurality of mapping registers, including at least a universal resource identifier (URI) mapping register for each network protocol supported by a gateway device, at the gateway device ; instructing a communication stack to broadcast a discovery request message under its respective network protocol with the gateway device ; receiving network protocol-respective resource data from one or more networked device in reply to the discovery request message; processing each received resource data into a network protocol-respective URI format; storing each processed URI in the device information base at the gateway device ; mapping the network protocol-respective URI of a discovered resource to a URI format of each further network protocol supported by the gateway device and storing each such format mapping in its network protocol-respective URI mapping register at the gateway device; and translating heterogeneous data communications between networked devices by mapping source device application layer messages to destination device application layer messages according to the device information base and the URI mapping registers at the gateway device.

An embodiment of the method may comprise the further steps of processing network protocol-respective resource data that is received in a registration request message sent by a networked device, into a network protocol-respective URI format and storing the processed URI in the device information base; and/or receiving a discovery request message sent by a networked device, matching the network protocol of the request against the device information base and network protocol-respective URI mapping register, and answering the discovery request with matched resource data.

A further embodiment of the method may also comprise the further steps of translating a first data communication received from a first network device corresponding to a first resource request message, into a second data communication corresponding to a second resource request message compatible with the respective network protocol of a second network device supplying the queried resource ; translating a third data communication received from the second network device corresponding to a first resource reply message, into a fourth data communication corresponding to a second resource reply message compatible with the respective network protocol of the first network device ; and storing a map comprising device information base data and URI mapping registers data processed to perform the translations.

In a variant of this embodiment, the first data communication received may be a resource state request message, the third data communication may be a resource state reply message, and the plurality of mapping registers may comprise an observer register in which the translation module stores the map. Alternatively, or additionally, the first data communication received may be a confirmable request message instead, whereby the third data communication may be a resource acknowledgement message and the plurality of mapping registers may further comprise a confirmable request register in which the translation module stores the map.

The embodiments of both the gateway device and the method of the invention are particularly apt to implement interoperability between legacy and newer networked devices operating under respective network protocols defining heterogeneous network environments, such as IoT devices of existing home automation systems and additional IoT devices to enhance the functionality of such systems over time.

The interoperability framework implemented by the gateway and the method of the invention enables interoperability among devices based on heterogeneous communication technologies and protocols, which easily integrates with existing home automation systems and extends connectivity to the Cloud. Application developers can continue using native, network protocol-respective APIs, without needing to learn a new, interoperability framework-specific API, but a single application can still be used for controlling and managing heterogeneous devices.

According to yet another aspect of the present invention, there is also provided non-transitory computer-readable medium storing computer-executable instructions that, when executed by at least one processor, configure at least one processor to implement a method as described hereinabove and thus to perform operations comprising instantiating a device information base and a plurality of mapping registers, including at least a universal resource identifier (URI) mapping register for each network protocol supported by a gateway device, at the gateway device ; instructing a communication stack to broadcast a discovery request message under its respective network protocol with the gateway device ; receiving network protocol-respective resource data from one or more networked device in reply to the discovery request message ; processing each received resource data into a network protocol-respective URI format; storing each URI in the device information base at the gateway device ; mapping the network protocol-respective URI of a discovered resource to a URI format of each further network protocol supported by the gateway device and storing each such format mapping in its network protocol-respective URI mapping register at the gateway device ; and translating heterogeneous data communications between networked devices by mapping source device application layer messages to destination device application layer messages according to the device information base and the URI mapping registers at the gateway device.

According to still another aspect of the present invention, there is also provided a non-transitory computer-readable medium storing computer-executable instructions that, when executed by at least one processor, configure at least one processor to implement a further method at a user device connecting to a remote gateway over a network, and comprising the steps of instantiating a user application having a graphical user interface ; connecting the remote gateway device having the non-transitory computer-readable medium storing the computer-executable instructions and having the at least one processor configured by same to perform operations introduced in paragraph [0025] ; downloading data from the device information base of the remote gateway device corresponding to remote networked devices and resources discovered by the gateway device ; outputting the downloaded networked devices data in the graphical user interface ; reading user input commands in the user interface representative of configuration parameters for one or more of the remote networked devices ; and communicating user input commands to the remote gateway device.

In any of the gateway device, methods, computer-executable instructions and their various embodiments introduced hereinabove, a discovery request message may be either a general-discovery message for discovering any resource operating under any network protocol, or a filtered-discovery message for discovering a specific resource operating under any network protocol or any resource operating under a specific network protocol.

In any of the gateway device, methods, computer-executable instructions and their various embodiments introduced hereinabove, the network protocol-respective resource data of each discovered resource may comprise, and the device information base may store, one or more selected from the list comprising attributes, interfaces, communication standard, network layer address, application end point/port number, transport protocol, application layer protocol, access rights and security policies.

In any of the gateway device, methods, computer-executable instructions and their various embodiments introduced hereinabove, a generic URI format to identify a resource may take the form of 'iof://technology-identifier:network-layer-address:end-point/resource-type/resource-name'.

Other aspects of the present invention are as stated in the appended claims.

### Brief Description of the Drawings

The invention will be more clearly understood from the following description of an embodiment thereof, given by way of example only, with reference to the accompanying drawings, in which:-
Figure 1 shows a networked environment with a plurality of data processing devices, including a personal device, a router-modem and home automation systems each comprising respective IoT networked devices.
Figure 2A provides a logical representation of the silo-ing of co-existing IoT networked devices shown in Figure 1 to respective network protocol-specific silos according to the prior art.
Figure 2B provides a logical representation of a prior art interoperability framework mitigating the silo-ing of co-existing IoT networked devices shown in Figures 1 and 2A.
Figure 3 is a block diagram of the interoperability framework according to an embodiment of the invention.
Figure 4 shows hardware components of a gateway device suitable for implementing the interoperability framework of Figure 3, including at least one memory and at least one processor.
Figure 5 illustrates the contents of the memory of the gateway device of Figure 4 at runtime, including an operating system, a set of instructions and discrete data modules thereof embodying the logic blocs of Figure 3.
Figure 6 details steps of the main logic performed by the set of instructions and modules thereof shown in Figure 5, according to an embodiment of the invention.
Figure 7 details steps of a sub-logic performed by the set of instructions and modules thereof shown in Figure 5, in answer to an IoT device-initiated discovery request message.
Figure 8 details steps of a sub-logic performed by the set of instructions and modules thereof shown in Figure 5, in answer to an IoT device-initiated observe request message.
Figure 9 details steps of a sub-logic performed by the set of instructions and modules thereof shown in Figure 5, in answer to an IoT device-initiated confirmable request message.
Figure 10 provides a logical representation of the interoperability framework shown in Figures 3 to 9 mitigating the silo-ing of co-existing IoT networked devices shown in Figures 2A and 2B.
Figure 11 provides a logical representation of the bridging of network controllers of heterogeneous home automation systems by the interoperability framework shown in Figures 3 to 9, inherent to the logical representation of Figure 10.
Figure 12 illustrates the bridging of Figure 11 applied to the home automation systems of Figure 1.
Figure 13 shows hardware components of the personal device shown in Figure 1, including at least one memory and at least one processor.
Figure 14 illustrates the contents of the memory of the personal device of Figure 1 at runtime, including an operating system, a set of instructions and a graphical user interface thereof, for interacting with the home automation systems of Figure 1 within the interoperability framework of the invention shown in Figures 3 to 12.

### Detailed Description of the Drawings

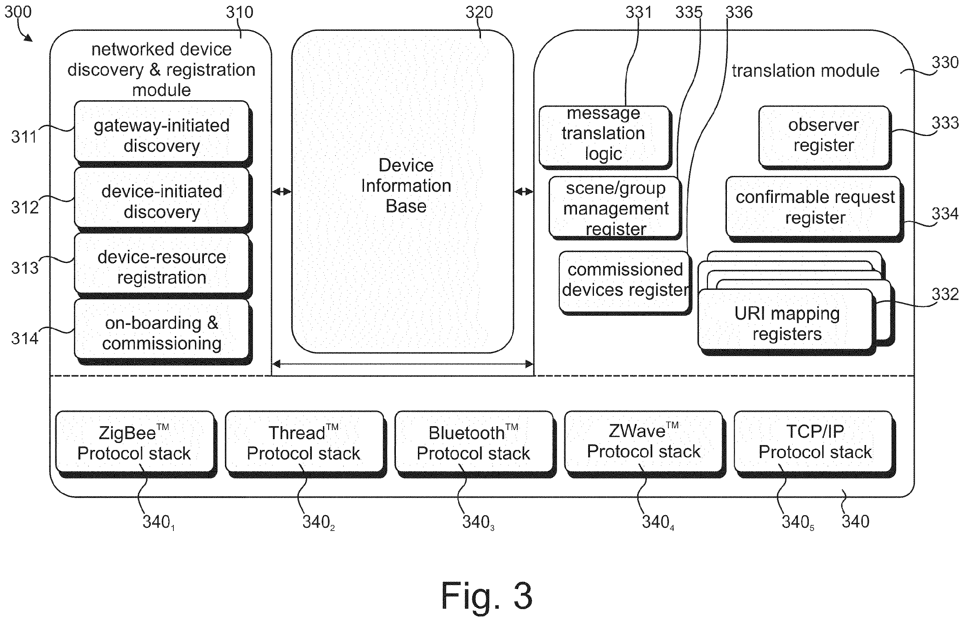

Referring now to the figures and initially Figure 3, there are shown distinct functional modules of an embodiment of the interoperability framework 300 according to an embodiment of the invention, apt to allow IoT devices such as those 104₁₋₇ described with reference to Figure 1, manufactured by different vendors and possibly based on different communication technologies and protocols, to be able to discover and communicate with each other regardless of the underlying communication technologies and protocols running at the different layers of a networking protocol stack.

The interoperability framework 300 comprises three main functional modules, namely a networked device discovery and registration module 310, a device information base 320 and a translation module 330, wherein both the networked device discovery and registration module 310 and translation module 330 are respectively interfaced with the network protocol families 340_{1-N} implementing known and developing IoT networks 100_{N} generally based upon one of the IEEE 802.11.n, ITU-T GT.9959, IEEE 802.15.1 and IEEE 802.15.4 protocols, and of which the ZigBee™ protocol stack 340₁, the Thread™ protocol stack 340₂, the Bluetooth™ protocol stack 340₃ and the Z-Wave™ protocol stack 340₄ are examples, besides the TCP/IP protocol stack 340₅.

The interoperability framework 300 is typically implemented physically by a gateway device. Within the interoperability framework 300, the networked device discovery and registration module 310 is functionally tasked with the discovery, on-boarding, commissioning and binding of networked devices, and comprise four functional modules itself: a first module 311 functionally tasked by the gateway to discover networked devices and their resources; a second module 312 functionally tasked by networked devices to discover other networked devices; a third module 313 functionally tasked by networked devices to register resources; and a fourth module 314 for on-boarding and commissioning discovered devices.

The device information base 320 is hosted by the gateway, and its purpose within the framework 300 is to provide a uniform representation of resources, including their respective access rights and security policies where provided, for all networked devices, wherein any resource in any network 100 can be uniquely identified by a universal resource identifier (*"URI"*), and wherein different networks 100_{1-N} can use different formats for the URI. The device information base is populated by the networked device discovery and registration module 310 during the resource discovery and registration process carried out by the sub-modules 311-314 thereof, and stores the following information about any resource: communication standard, network layer address, application end point/port number, transport protocol, and application layer protocol. In an embodiment of the device information base 320, the following URI format is used to identify resources and encode some of their attributes and interfaces: iof://technology-identifier:network-layer-address:endpoint/resource-type/resource-name. However, skilled persons will readily understand that alternative resource representation models and formats may be used, including known formats such as oneIoTa (www.oneiota.org).

The translation module 330 is functionally tasked with translating respective data communications between networked devices of heterogeneous networks 100_{i-N} and maintaining logical contexts for data exchange therebetween, and comprises an application message mapping module 331 and a plurality of registers.

The application message mapping module 331 is tasked with mapping one application layer message to another application layer message. To understand the function of this module 331, let us consider the example of a ZigBee™ networked switch 104₅ operating under its respective home automation profile and sending a network command to turn on a networked light unit 104₃ that is itself based upon the Thread™ network protocol. The switch and light devices 104₅, 104₃ are using different communication standards 340₁, 340₂ whereby the interoperability framework 400 passes the command through the translation module 330 at the gateway. The gateway hands the application layer message over to the application message mapping module 331 along with the information about the communication standard 340₁ used by the switch 104₅. The mapping logic module 331 extracts the network information, transport protocol information, application layer information, and real URI of the destination resource 104₃ by consulting the device information base for the light resource 104₃ invoked, and a URI mapping register 332 corresponding to the communication standard of the source device 104₅. The translation module 330 then maps the source device application layer message to the destination device application layer message. Finally, the translation module 330 instructs the Thread™ network protocol stack 340₂ at the gateway corresponding to the target device 104₃ to prepare and transmit the message. In this way, the ZigBee™ switch 104₃ command reaches the Thread™ light 104₃, and the light 104₃ acts upon the command.

The URI mapping register 332 described above is a core implementing aspect of the interoperability framework 300, for the framework 300 to expose a resource 104_{N} in its respective network 100_{N}, to one or more networked devices in (an)other respective network(s) network 100_{1-N}: the URI of each discovered resource needs to be unique and compatible with the URI format supported by other types of available networks. For this reason, the translation module 330 of the framework 300 populates and maintains a plurality of such URI mapping registers 332_{1-N} at the gateway, one respective for each communication standard supported by the gateway: the translation module 330 maps the URI of a discovered resource in a respective network 100_{N} to the supported URI format(s) of (an)other network(s) 100_{1-N} supported by the gateway, and stores each unique mapping in its network-respective URI mapping register 332 such that, for each discovered resource, there is a corresponding record in each URI mapping register 332.

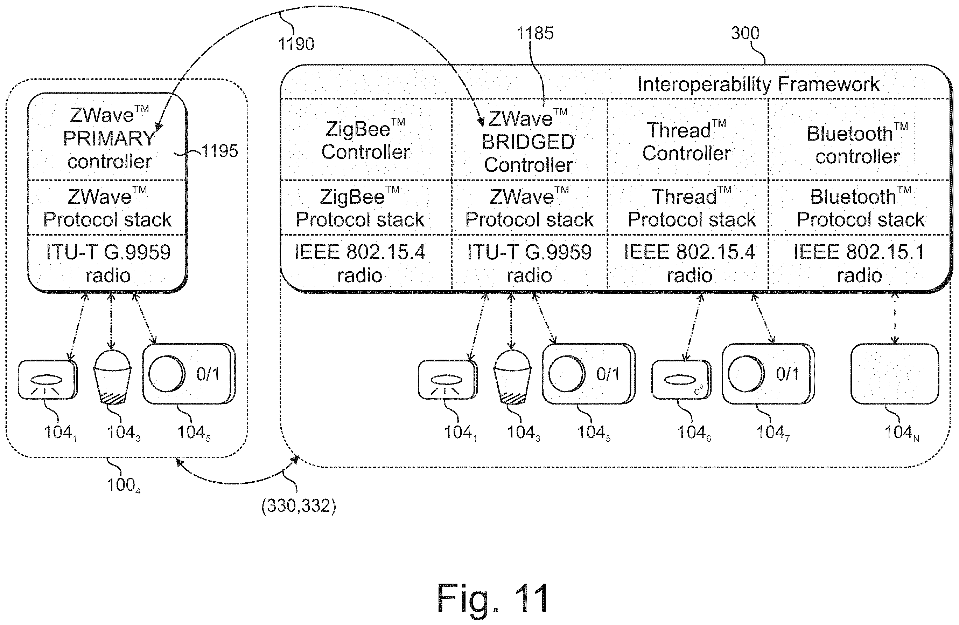

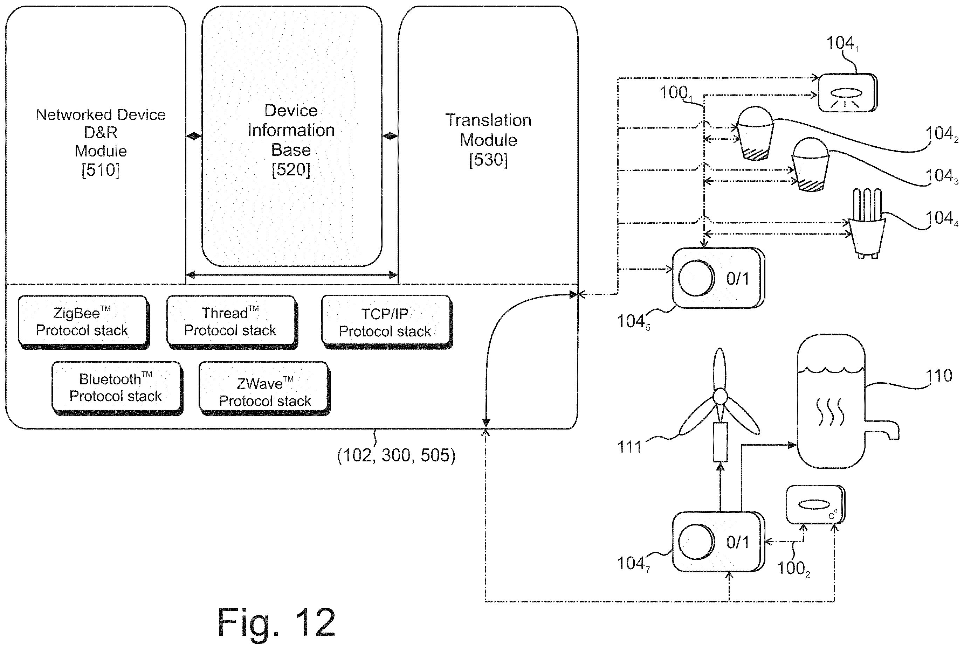

In an embodiment wherein a specific URI format is adopted for the framework 300 itself, discovered resource URI are mapped by the translation module 330 to a further URI mapping register 332 maintained for that framework-specific URI, which facilitates the control of networked resources belonging to different networks through a single user application, described with reference to Figures 11 and 12 herein.

A further register populated and maintained by the translation module 330 is the observer register 333, to accommodate the fact that different application layer protocols provide different APIs to observe a resource state. Adopting the same example of switch and light devices 104₅, 104₃ using different communication standards 340₁, 340₂, when the ZigBee™ networked switch 104₅ operating under its respective home automation profile sends a network command to observe the status of the networked light unit 104₃. When the switch 104₅ transmits a *get* request with an *observe* option, the application message mapping module 331 maps the request for the light unit 104₃ as hereinbefore described, and the translated *observe* message is transmitted to the light unit 104₃ by the gateway. As the observed light 104₃ will periodically transmit its state to the observer, therefore the message mapping module 331 needs to maintain the mapping of the *observe* request at the gateway, and stores this mapping information in the observer register 333. Thus, whenever an *observe* response is transmitted by the light unit 104₃, it is received at the gateway, which hands it to the application message mapping module 331. The application message mapping module 331 maps the *observe* response to a corresponding *observe* request of the switch 104₅ using the observer register 333, and translates the application layer message accordingly, which is transmitted to the switch 104₁ in a manner that is not only understandable to the switch 104₅ but which the switch 104₅ can also match to its original *get* request with *observe* option.

A further register populated and maintained by the translation module 330 is the confirmable request register 334, to accommodate the fact that resource requests and commands can be issued by networked devices with a condition of acknowledgement. The purpose of this register is to maintain the mapping of a request sent by a source device in a first network 100₁, which requires an acknowledgement response from the target device in a second network 100₂; such as, for instance and using the same example of switch and light devices 104₅, 104₃ using different communication standards 340₁, 340₂, when the ZigBee™ networked switch 104₅ should transmit a *switch* command to the Thread™ network light unit 104₃, assorted with an *acknowledge* option to confirm light activation (or de-activation, as the case may be) by the light unit 104₃. The application message mapping module 331 needs to maintain the mapping of the *acknowledge* request at the gateway until the acknowledgement is received from the light unit 104₃, and so stores this mapping information in the confirmable request register 334, whereby the logic of the mapping, translating and, eventually, response communication from the gateway to the switch 104₅ are substantially identical to those described with the reference to the observer register 333 hereinabove.

A further register which may be populated and maintained by the translation module 330 is the scene/group management register 335. The purpose of this register is to maintain thematic, logical and/or functional associations of networked devices 104_{N} in heterogeneous networks 100_{N}, for automating the mapping and translation of application layer messages substantially as described above, wherein the messages correspond to the triggering of resources and responses from triggered resources across communication standards, according to the parameters embodying the theme, logic and/or function of the association. With this register, an event notification from a networked device 104_{N}, or a group thereof, in a first network 100_{N}, can trigger a response from a remote networked device 104_{N+1}, or a group thereof, in a second network 100_{N+1}: an example may be a notification of activation of the user presence sensor 104₁ in the Zigbee 'lighting' network 100₁ of Figure 1, triggering a temperature check at the sensor unit 104₆ in the Thread 'heating' network 100₂ of Figure 1. Thematic, logical and/or functional events and corresponding devices 104_{1-N} are grouped in the framework by a local or remote user application described hereinafter with reference to Figures 11 and 12, the input to which instructs the application message mapping module 331 as to which devices' URIs to map between, wherein the application message mapping module 331 then stores the mapping in the scene/group management register 335 according to the same principles as described with reference to earlier-described registers 332, 333, 334.

The translation module 330 further maintains a register 336 of commissioned networked devices populated by the fourth module 314 of the networked device discovery and registration module 310, which stores data representative of the or each resource successfully commissioned within the framework 300 whilst it remains connected to its network 100_{N}, and which the application message mapping module 331 may consult in real-time for a variety of data processing purposes; for instance checking networked device connectivity status before performing mapping, translation and protocol stack calling operations, to avoid redundant processing if the networked device is offline.

A device 104_{N} has to on-board itself on a network 100_{N} before it can broadcast and receive data with other devices on that network, and achieves this state with the help of the fourth module 314, which is an on-boarding module. The interoperability framework 300 provides a mechanism to on-board a device 104_{N} in one kind of network 100₁ to different other networks 100_{2-N} by having the onboarding module 314 share a network key with the device 104_{N}. This network key is used by a device 104₁ to communicate with other devices 104_{2-N} in the network 100_{N}. The network key is communicated to the device in a secure manner using the pre-installed key on the device. Therefore, the interoperability framework 300 also maintains a set of keys to on-board devices 104_{1-N} on different networks 100_{1-N}. Moreover, the interoperability framework 300 also maintains the list of network keys used in different available networks 100_{1-N}. The purpose of on-boarding and commissioning with the on-boarding module 314 in the interoperability framework 300 is to act as a proxy for devices belonging to different networks and on-boarding them onto other available networks. Usually WPAN communication standards for HASs requires the creation of associations among different devices, and the process is usually called device binding. As one of the goals for an interoperability framework in HASs is to enable the control of devices through devices which belong to different communication standards and protocols, therefore another purpose of the on-boarding module 314 is to create device binding among heterogeneous devices based on different communication standards and protocols, wherein the fourth module 314 stores such commissioning information in the commissioned devices register 336.

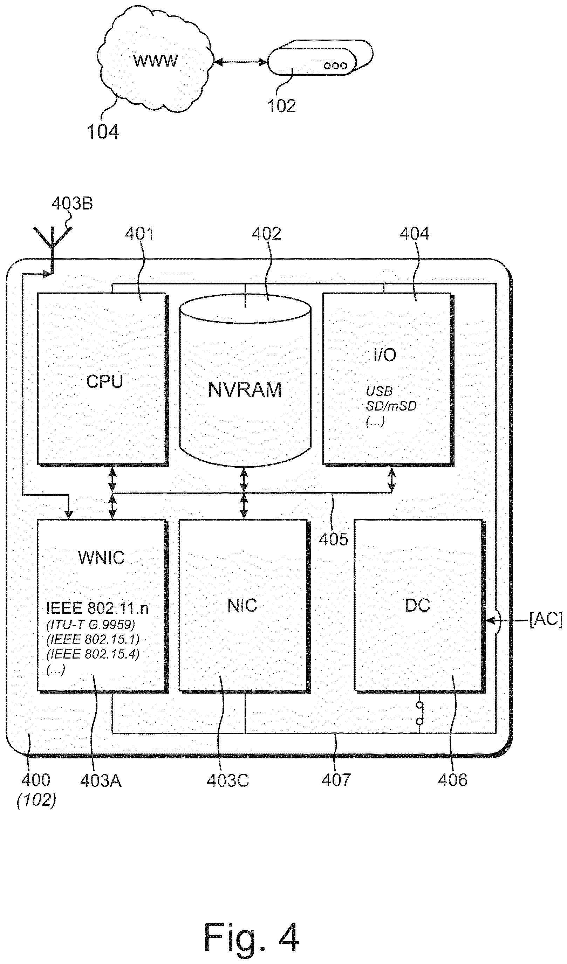

The interoperability framework 400 is physically implemented by a gateway device, example hardware components of an embodiment of which are shown and described by reference to Figure 4. The gateway device 400 is a data processing architecture comprising at least one processor 401, for example a general-purpose microprocessor conforming to the Cortex® processor design as manufactured by or under license from ARM®, which acts as the main controller of the gateway 400 and which is coupled with memory means 402, comprising of any one or more of volatile random-access memory ("RAM"), non-volatile random-access memory ("NVRAM") or a combination thereof.

The gateway 102 further includes networking means. Wireless data communication functionality is provided by a wireless network interface card ("WNIC") 403A associated with an aerial 403B that receives waveform signals from remote data processing devices, such as the various devices 104_{N} composing each HAS 100_{1,2} of the networked environment of Figure 1, wherein an analogue-to-digital module (not shown) or other or a dedicated signal processing unit (not shown) of the WNIC 403A processes such waveforms into digital data. The network connectivity parameters and functionality of the WNIC 403A provide for functional and physical compatibility with a variety of communication protocols, typically adopted as developing IoT standards and so based upon the IEEE 802.11.n, ITU-T GT.9959, IEEE 802.15.1 and IEEE 802.15.4 protocols. The networking means also include a network interface card (NIC) 403C providing wired data communication functionality, which interfaces the gateway device 400 with any hardwired Local Area Network ("LAN") and may be preferred to wireless communications for remote networked devices, the functionality of which is contingent upon high-bandwidth availability for voluminous data communications, for example audio-video data servers.

The gateway 102 further includes local data input means 404, in the form of at least one Universal Serial Bus (USB) socket interface, or alternatively a Secure Digital ("*SD*") or micro Secure Digital ("*mSD*") reader-writer device 404, so that digital data, for instance a set of instruction implementing the interoperability framework of the invention, may be read from an local external data storage device rather than downloaded from a remote networked source, in the absence of wide area network connectivity or availability. The CPU 401, NVRAM 402, networking means 403A to 403C and local input means 404 are connected by a data input/output bus 405, over which they communicate in order to provide network communication functionality and receive networked device data, interrupts, and inputs. An electrical converter 406 interfaces the gateway device 103 with a local power supply and supplies power to the components 401-405 through an electrical circuit 407.

It will be readily understood by the skilled reader, that the example components of the gateway device 400 described hereinbefore correspond substantially to those of a router or other network interfacing device, such as the router 102 described with reference to the networked environment of Figure 1 and, in an embodiment of the invention, which may itself be configured into the gateway device 400 by a set of instructions as described hereafter, hence its inclusion by reference in Figure 4.

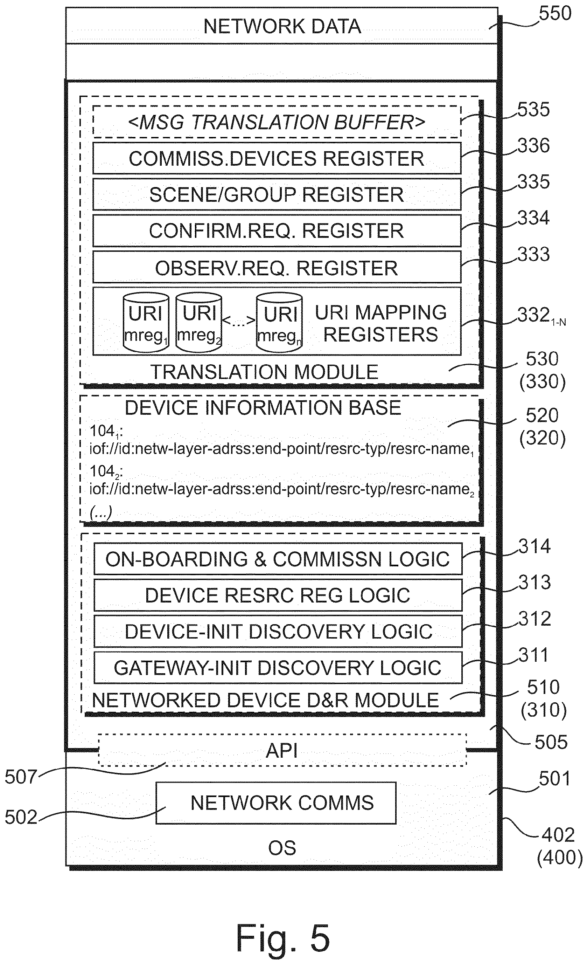

The interoperability framework 300 is capable of being implemented by configuring the gateway device 400 with a set of data processing instructions, shown loaded at runtime and in the context of the memory 402 in Figure 5, wherein the set of instructions configures the gateway device 400 with the respective functionalities and registers of framework modules 310, 320, 330.

With reference to Figure 5 therefore, an operating system (OS) is first shown at 501, which includes instructions for governing the basic data processing, interdependence and interoperability of the gateway hardware components 401 to 407, and communication subroutines 502 which configure the gateway device network components 303A, 303B for bilateral network communications, for instance and respectively with the wireless networks 100₁, 100₂ and the WAN 104. The OS 501 also includes input subroutines for reading and processing input data, such as updating data processing instructions uploaded via the local I/O interface 404.

A data processing application 505 embodies an interoperability framework 300 at the gateway device 400 and is interfaced with the OS 501 through one or more Application Programmer or Programming Interfaces (APIs) 507. The application 505 comprises and coordinates the respective data processing activity of function-specific data processing subroutines embodying the logic of functional framework blocs 310, 320, 330 as described hereinbefore.

Accordingly a first main routine 510 embodies to the functionality of the networked device discovery and registration module 310, inclusive of logic embodying the first module 311 for the main routine 510 to discover networked devices and their resources; logic embodying the second module 312 and invoked by networked devices to discover other networked devices; logic embodying the third module 313 and invoked by networked devices to register resources; and logic embodying the fourth module 314 for the main routine 510 to on-board and commission discovered devices 104_{N}.

A next main data structure 520 of the application 505 corresponds to the device information base 320, which may comprise a list of discovered networked devices 104_{N} each referenced by its respective URI as output by the first main routine 510.

A second main routine 530 embodies to the functionality of the translation module 330, including therefore logic embodying the application message mapping module 331, and several data structures each embodying a respective register, inclusive of the plurality of URI mapping registers 332, the observer register 333, the confirmable request register 334, the scene/group management register 335 and the commissioned networked devices register 336. The second main routine 530 further configures a portion of the memory 402 as a translation buffer, for storing transient mapping data, transient application layer message translation data, queued network requests and, generally, data being processed in real time by the translation module 330 and its application message mapping module 331 at runtime, according to the logic and principles described herein.

Further data 550 in the memory 402 may comprise local or network data, some or all of which may be processed by the interoperability framework application 505 and sub-routines 510-530 thereof, or by or for other third-party set(s) of instructions (s) (not shown) being processed in parallel with the said interoperability framework 300. An example of further local data is for instance local firmware update data read by the OS 501 in real time from a data storage device connected to the input-output interface 404. An example of further network data is for instance real-time transitory packets of inbound networked device requests and/or outbound translated responses.

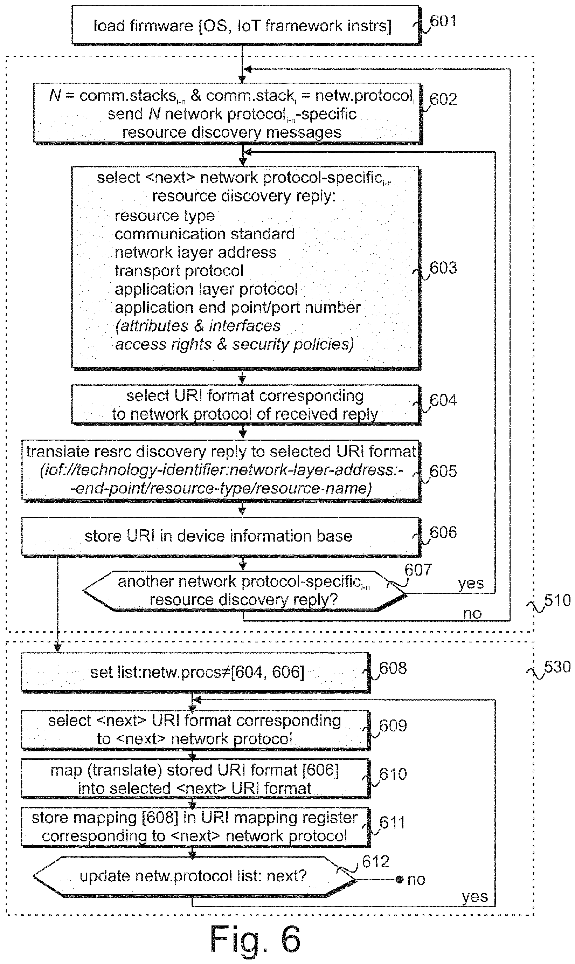

Figure 6 details steps of the main logic performed by the set of instructions 505 and modules 510-530 thereof, according to an embodiment of the invention.

Initially at step 601, the gateway 400 loads the OS 501 and the set of instructions 505 embodying the interoperability framework 300. At a next step 602, the networked device discover module 501 enunciates the number N of communication stacks compatible with the framework and corresponding to respective network protocol 340, then instructs each communication stack to send a network protocol-respective resource discovery message, resulting in N discovery request messages. Upon receiving a first resource discovery response from a remote networked device 104 under its respective network protocol at step 603, the discovery module 510 parses the response for resource characteristics data representative of the resource type, communication standard, network layer address, transport protocol, application layer protocol, application and point and/or port number, and where available attributes, interfaces, access rights and security policies of the resource. At step 604, the discover module 510 selects the URI format corresponding to the network protocol of the received response and, at step 605, translates the resource discovery response to the selected URI format. At a next step 606, the discover module 501 stores the resource/respective URI in the device information base 520.

A questions is then asked at step 607, about whether a further network protocol/specific resource discovery response has been received, for instance from a further networked device 104 operating under the same or another network protocol. If the question is answered positively, control returns to step 603 for processing a respective URI for this further resource and storing same in the device information base 520, and so on and so forth. Alternatively, the question at step 607 is answered negatively whereby control returns to step 602 for generating further discovery messages in case further networked device (S) 104 have since been added to the networked environment.

In parallel with the networked device discovery procedure undertaken by the discovery module 501, each new URI instantiated in the device information base 520 at step 606 causes the translation module 530 to perform respective steps for populating the URI mapping register (S) 332. Accordingly, at step 608 the translation module 503 lists all network protocols handled by the framework 300 that differ from the network protocol corresponding to the selection of step 604 and embedded in the new networked device URI stored at step 606.

At step 609, the translation module 503 selects the next URI format corresponding to the next different network protocol then, at step 610, translates the format of the URI stored at step 606 into the respective URI format of the network protocol selected at the previous step 609. At step 611, the translation module 530 stores the mapping logic performed at step 610 into the URI mapping register 332 corresponding to the network protocol mapped to. At step 612, the translation module 530 updates the list enunciated at step 608 by removing the network protocol mapped to at the previous step 610 and a question is then asked about whether there is a next network protocol in the updated list. If the question of step 612 is answered positively, control returns to step 609. Alternatively, the logic of the translation module 530 triggered by a new URI record in the device information base 520 ends.

Preferably, the discovery module 510 can transmit either a general discovery message, or a filter discovery message. In the general message, the discovery module 510 does not use any filter query, thereby indicating its interest in discovering all the resources available on remote network devices 104_{1-N} in different networks 100_{1-N}. In the filter message, a query is transmitted with the discovery message and a device in a particular network only responds to the message, if it provides a resource matching the query. For example, the discovery module 510 may initiate a discovery process in the Thread™ network to discover one or more resources 104₆ with a temperature sensor. Only devices 104₆ with a temperature sensor resource respond to the discovery request. The framework 300 uses the discovery process standardized by the underlying communication standards 340_{N}, therefore when a response for the discovery message is received at the gateway, the gateway-initiated discovery module 510 converts the received resource representation in a uniform resource representation (URI) format, and stores the information in the device information base 520.

Preferably still, as network devices are known which explicitly seek to register their respective resources with an IoT gateway, for example at the time of joining a network 100_{N}, then if a communication standard 340_{N} allows a device 104 to explicitly register its resources, the device can send an appropriate message for resource registration to the gateway, wherein the discovery module 510 processes that registration message in the same way as it processes responses to its own discovery requests according to steps 603 to 612.

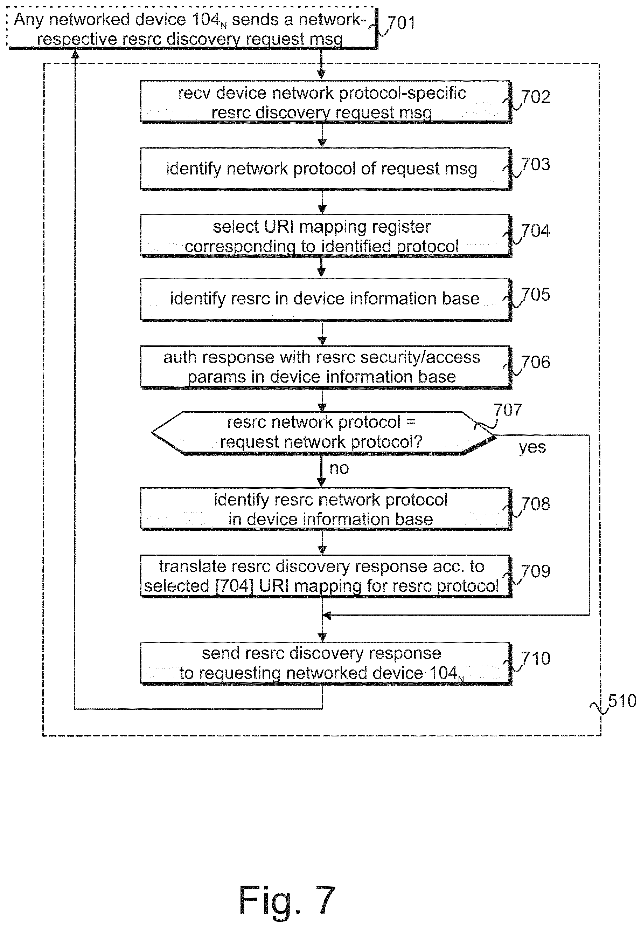

For communication and control, devices in a network also need to know other resources available in all available networks. Therefore, a device may also be adapted to initiate its own discovery procedure, like the gateway 400, and such discovery may be also be general or filtered. Figure 7 details logic steps of a data processing task performed by the discovery module 510 shown in Figure 5, in answer to a networked device-initiated discovery request message.

Whenever a networked device 104 sends a network protocol-respective resource discovery request message at a first step 701, the discovery module 510 eventually receives the resource discovery request message at step 702. The discovery module identifies the network protocol of the discovery request message at step 703 substantially per the same logic implementing step 603. At a next step 704, the discovery module next selects the URI mapping register 332 corresponding to the network protocol identified at step 703. At a next step 705, the discovery module 501 identifies the resource in the device information base 520. At a next step 706, the discovery module authorises a response to the requesting networked device according to the access rights and/or security policies of the resource identified at step 705, that are stored in the device information base 520. If the authorisation is denied, the logic ends. Alternatively, when the authorisation is granted, a question is asked at step 707, about whether the network protocol of the identified resource correspond to the network protocol of the resource discovery request identified at step 703.

If the question of step 707 is answered negatively, the discovery module 501 identifies the network protocol of the resource output by step 705 in the device information base 520, at step 708. At a next step 709, the discovery module invokes the translation module 330 to translate the resource discovery response for compatibility with the network protocol of the requesting networked device according to the URI mapping register selected at step 704. Thereafter, at step 710, the discovery module 510 invokes the communication stack of the requesting networked device to broadcast the translated resource discovery response. In the alternative, when the question of step 707 is answered negatively, corresponding to identity of network protocol between the requesting networked device and the resource, control bypasses steps 708 and 709 to broadcast the discovery response at step 710, without translation. In either case, control returns to step 701 for processing any further resource discovery request message.

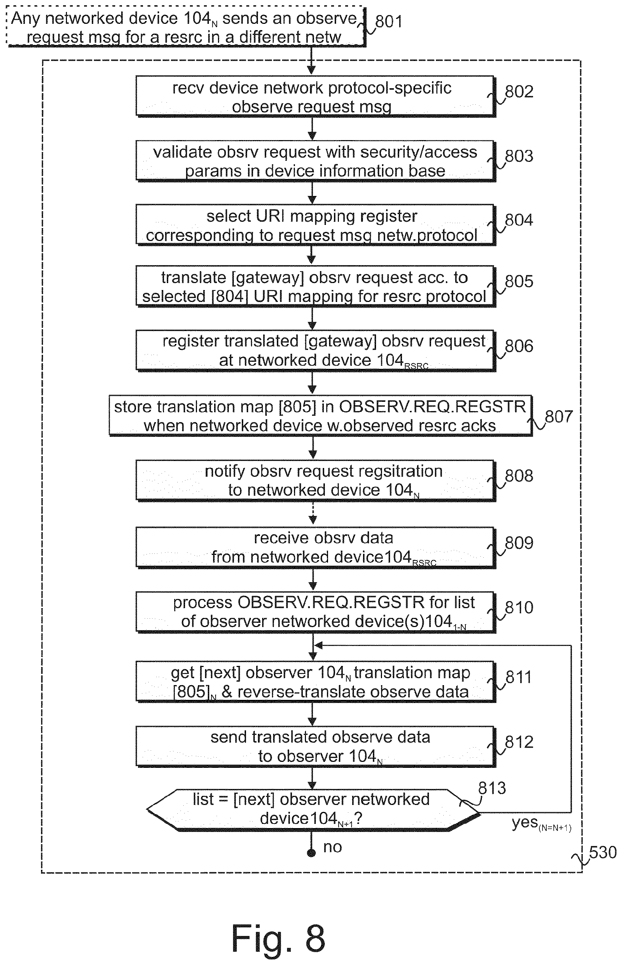

Figure 8 details logic steps of a data processing task performed by the translation module 530, in answer to a networked device-initiated observe request message addressed to a networked device operating under a different network protocol, inclusive of mapping the request in the observer register 333.

Whenever a networked device 104 sends a network protocol-respective resource observe request message at a first step 801, the translation module 530 eventually receives the resource observe request message at step 802. At step 803, the translation module 530 first validates the observe request according to the access rights and/or security policies of the resource, that are stored in the device information base 520. At a next step 804, the translation module 530 selects the URI mapping register 332 corresponding to the network protocol of the observe request message. At a next step 805, the translation module 530 translates the resource observe request for compatibility with the network protocol of the observable resource according to the URI mapping register mapping the URI format of the requesting network device to the network protocol of the observable resource. At a next step 806, the translation module 530 registers the translated (gateway) observe request at the networked device providing the observable resource. At a next step 807, which is contingent upon receiving an acknowledgement from the networked device contacted at step 806, the translation module 530 stores the mapping information relied upon at step 805 in the observer register 333. At a next step 808, the translation modules 530 notifies the registration of the observable request to the requesting (observing) networked device that sent the initial network message at step 801.

A period of time may elapse until the translation module 530 receives a network message from the resource networked device encoding observed data at step 809. At a next step 810, the translation module 530 looks-up the observer register 333 for one or more observing networked device(s) monitoring receipt of the received observed data. At a next step 811, the translation module 530 selects the registered mapping data 805, previously stored in the observer register 333 at step 807, corresponding to the, or a first, observing network device and reverse translates the observed data for compatibility with the network protocol thereof. At a next step 812, the translation module sends the translated observed data to the, or first, observing network device. A question is next asked at step 813, about whether there is a further observer network device in the list, to which the received observed data should be sent. If the question of step 813 is answered positively, control is returned to step 811, wherein the translation module 503 may select the registered mapping data 805, likewise previously stored at step 807, corresponding to the next observing device and translate the same observed data for compatibility with the respective network protocol thereof, and so on and so forth. Alternatively, or eventually, the question of step 813 is answered negatively, whereby the data processing logic ends.

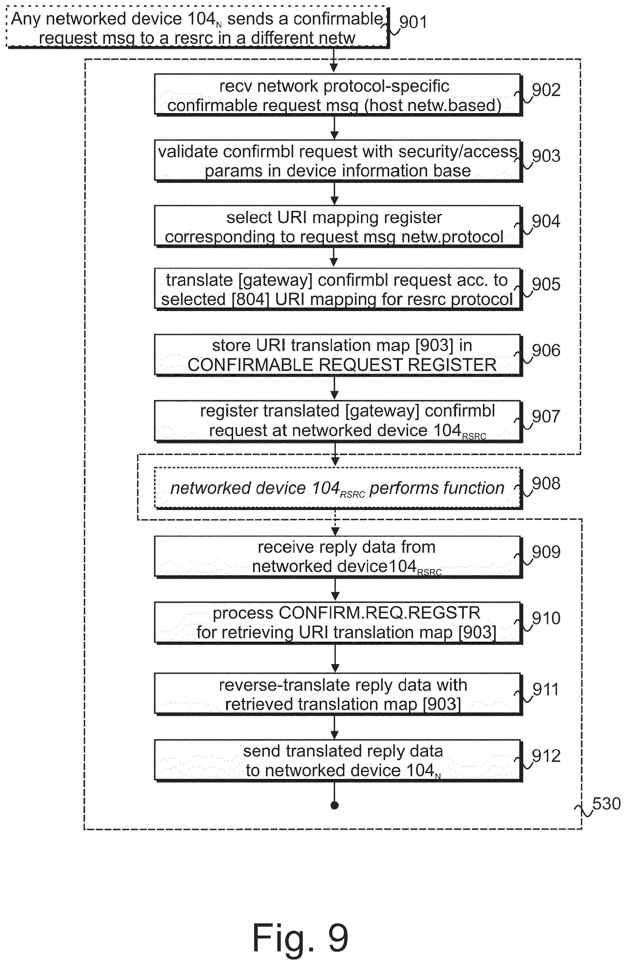

Figure 9 details logic steps of a data processing task performed by the translation module 530, in answer to a networked device-initiated confirmable request message addressed to a networked device configured operating under a different network protocol, inclusive of mapping the request in the confirmable request register 334.

Whenever a networked device 104 sends a network protocol-respective confirmable request message at a first step 901, the translation module 530 eventually receives the confirmable request message at step 902. At step 903, the translation module 530 first validates the confirmable request according to the access rights and/or security policies of the resource, that are stored in the device information base 520. At a next step 904, the translation module 530 selects the URI mapping register 332 corresponding to the network protocol of the confirmable request message. At a next step 905, the translation module 530 translates the confirmable request message for compatibility with the network protocol of the target resource according to the URI mapping register mapping the URI format of the requesting network device to the network protocol of the target resource. At a next step 906, the translation module 530 stores the mapping information relied upon at step 905 in the confirmable request register 334. At a next step 806, the translation module 530 registers the translated (gateway) confirmable request at the target networked device.

A period of time may elapse until the target networked device performs the function or task commanded by the translated confirmable request at step 908 and sends a corresponding response to the gateway 400. Accordingly, eventually the translation module 530 receives a network message from the resource networked device encoding reply data or other confirmation data at step 909. At a next step 910, the translation module 530 looks-up the confirmable request register 334 for the networked device monitoring receipt of the confirmation data. At a next step 911, the translation module 530 selects the registered mapping data 905, previously stored in the confirmable request register 334 at step 906, corresponding to the source network device and reverse translates the confirmation data for compatibility with the network protocol thereof. At a next step 912, the translation module sends the translated confirmation data to the source network device, whereby the data processing logic ends.

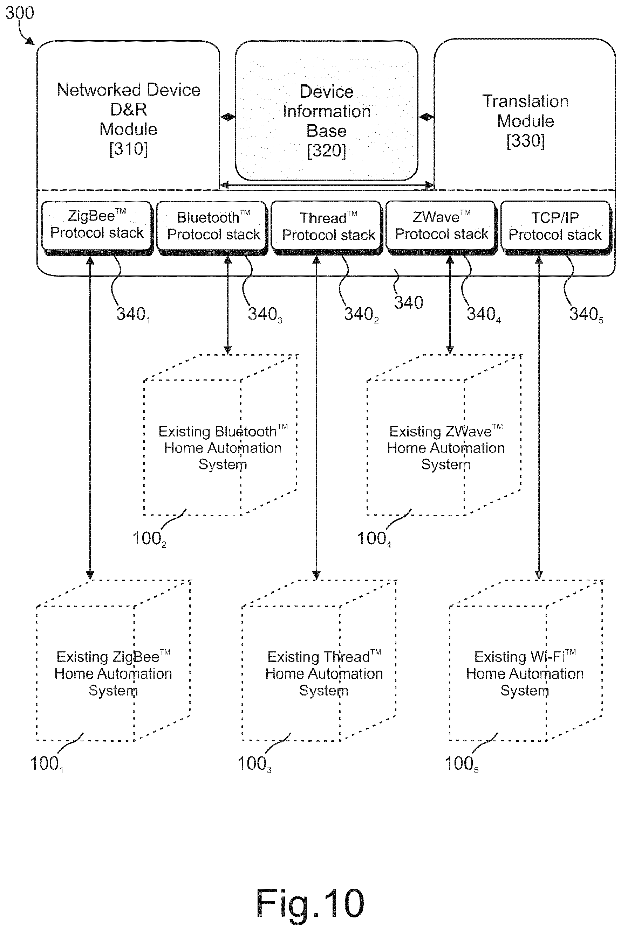

With reference to Figure 10, the interoperability framework 300 as hereinbefore described fully mitigates the silo-ing of co-existing IoT networked devices previously described with reference to Figures 2A and 2B, since the respective network devices, and their resources, each of a plurality of heterogeneous home automation networks 100₁₋₅ are all discovered, on-boarded, commissioned and bound by the networked device discovery and registration module 310; all such network devices and their resources are uniquely identified in the framework 300 by their respective URI associated with their respective communication standard, network layer address, application end point/port number, transport protocol, and application layer protocol stored in the device information base 320; wherein the translation module 330 is able to translate and relay data communications between all networked devices across the heterogeneous networks 100₁₋₅ and maintain logical contexts for data exchange therebetween through the application message mapping module 331 and registers, in particular the URI mapping register 332.

With reference to Figure 11, the modules and registers of the framework 300 provide an effective networking methodology to integrate with legacy home automation systems. Assuming that a smart home has multiple HASs 100_{i-N} based on different technologies, as described with reference to Figure 1 for instance, the interoperability framework 300 resides on the gateway 102, therefore the gateway 102 has e.g. ZigBee™, Bluetooth™, Thread™, Z-Wave™ and Wi-Fi™ (possibly using TCP/IP) and interfaces with the implementation of their respective networking protocol stacks 340₁₋₅. Each interface on the gateway 102 initiates a new network corresponding to the relevant technology, i.e. a network formed by the ZigBee interface can communicate with the existing ZigBee HAS 100₁, a network formed by the Bluetooth interface can communicate with the existing Bluetooth HAS 100₂, a network formed by the Thread interface can now communicate with the existing Thread HAS 100₃, a network formed by the Z-Wave interface on the gateway 102 can communicate with the existing Z-Wave HAS 100₄ and a network formed by WiFi interface can now communicate with the existing WiFi HAS 100₅.

Taking the example of an existing Z-Wave™ HAS 100₄, and a need to deploy more smart devices 104_{6-7-N} with heterogeneous communication standards and protocols, then to enable communication between devices in the existing HAS 100₄ and any newly installed HAS, the framework 300 needs to know the devices 104_{1,3,5} in the existing HAS 100₄, and it should also expose the devices 104_{6-7-N} under its control to the already deployed Z-Wave™ based HAS 100₄. To do so, the framework 300 configures the Z-Wave™ interface on the gateway 102 to become a Z-Wave™ bridge controller 1185. By becoming the Z-Wave™ bridge controller 1185, it can directly communicate (1190) with the Z-Wave™ devices 104_{1,3,5} in the existing HAS 104₄. Moreover, the framework 300 can expose the non- Z-Wave™ devices 104_{6-7-N} to the primary Z-Wave™ controller 1195 as virtual Z-Wave™ slave devices. Since the framework 300 maintains URI mapping registers 332 to expose devices 104 based on heterogeneous technologies to different types of supported communication technologies, therefore, there is ZWave-compatible mapping available for each device under our framework's control, and it can be used by the Z-Wave bridge controller 1185 to expose devices to the Z-Wave primary controller 1195, whereby the Z-Wave primary controller 1195 has access to Z-Wave devices 104_{1,3,5} directly, and the same is true for the bridged controller 1185. The devices in the new and existing HASs can thus easily communicate with each other.

Figure 12 is a bloc diagram of the interoperability framework 300 shown in Figure 3 and further described with reference to Figures 4 to 11, implemented at the gateway 102 and applied to the environment of Figure 1, wherein any networked device 104₁₋₇ of the respective communications standards implemented by the two HAS 100_{1,2} is able to communicate data requests and receive data responses as network protocol-respective application layer messages with each other, according to the framework principles described with reference to Figures 3 to 9.

In order to associate devices 104 with other devices 104 for parameterising the functionalities of one or more co-existing heterogeneous HASs, the interoperability framework 300 preferably relies on user software embodying network administration functions, through which a user can interact with the set of instructions 505 processed by the gateway 102. The set of instructions 505 running on the gateway 102 may provide information about the different on-boarded devices 104_{i-N} and allows a user to manage their properties. For example, when a new Bluetooth-based light device 104 is added to the network, after on-boarding the light device 104 the set of instructions 505 at the gateway 102 may output a message representative of the network addition, and may also prompt a user to create an association of the new light unit 104 with one or more devices 104 already available in the network, for instance the presence sensor 104₁ of Figure 1. Assuming that the presence sensor 104₁ of Figure 1 is a Z-Wave™ sensor, and that the user decides to create an association with that sensor in the existing home automation system 100₁, then upon processing an association instruction, the gateway instructions set 505 can communicate with the Z-Wave™ module to set association using the Z-Wave™- specific associate command.

Thus, in an embodiment of the interoperability framework 300 adapted to associate networked devices 104_{N} with other networked devices 104_{N} across heterogeneous networks in the group/scene register 335, the set of instructions 505, and/or another set of instructions provided to configure a personal device such as the user network terminal 101, may embody additional functionality for providing information about the devices commissioned onto the framework 300 based on data stored in the device information base, effectively unifying interaction with heterogeneous devices, and editing parameters of some or all network devices available therein regardless of their respective communication standard and implementing network protocol: the URI formatting, the device information base 320, the URI mapping registers 332 and the application message translation module 330 enable multiple manufacturers' devices 104_{1-N} to be controlled using a single application.

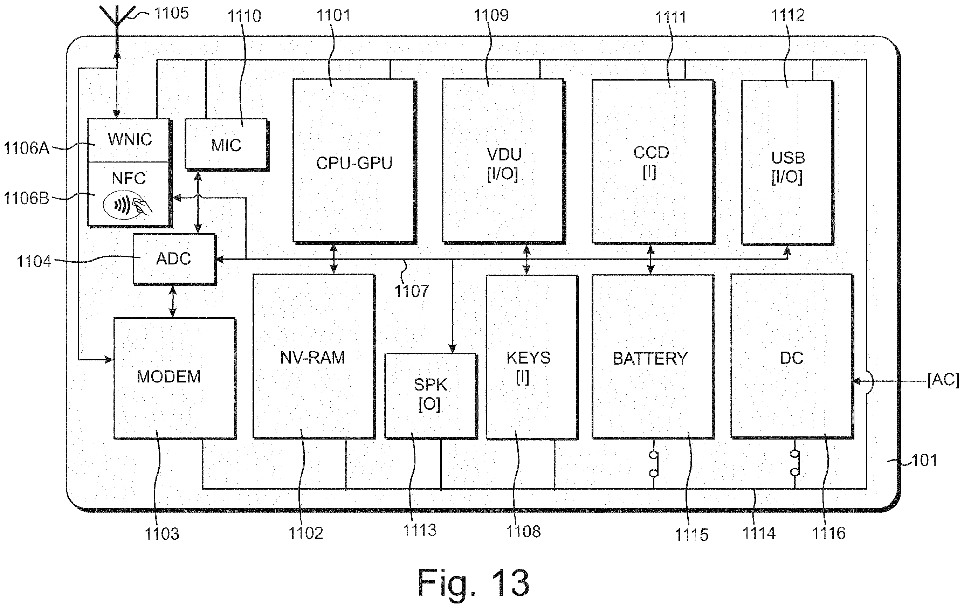

A typical hardware architecture of a personal device 101 suitable for configuration and use with such a unifying application, in the example a smartphone, is shown in Figure 13 in further detail, by way of non-limitative example. As skilled persons will readily understand, the hardware architecture of the smartphone 101 is substantially similar to that of the gateway device 102 and may also be substantially similar to that of many other personal, tablet computer and/or industrial computing devices 101, albeit with components designed for improved portability, rather than for durability and redundancy of operation by contrast with the components of the gateway device 102.

The typical smartphone 101 thus firstly includes at least one data processing unit 1101, for instance again a general-purpose microprocessor conforming to the Cortex® design manufactured by or under license from ARM®, acting as the main controller of the smartphone and which is coupled with memory means 1102, comprising volatile random-access memory (RAM), non-volatile random-access memory (NVRAM) or a combination thereof.

The smartphone 101 further includes networking means. Communication functionality is provided by a modem 1103, which provides an interface to external cellular communication systems such as 3G or 4G cellular telephone networks, and which is associated with an analogue-to-digital converter 1104 that receives analogue waveform signals through an aerial 1105 from nearby communication link relays and processes same into digital data with the data processing unit 1101 or a dedicated signal processing unit. Further communication wireless communication functionality is provided by a wireless network interface card (WNIC) 1106A interfacing the personal device 101 with wireless local networks, such as over the wireless connection 103 with the WLAN maintained by the router-gateway 102. Still further alternative wireless communication functionality is provided by a High Frequency Radio Frequency Identification (RFID) networking interface 1106B implementing Near Field Communication (NFC) interoperability and data communication protocols for facilitating wireless data communication over a short distance with correspondingly-equipped devices.

The CPU 1101, NVRAM 1102 and networking means 1103 to 1106B are connected by a data input/output bus 1107, over which they communicate and to which further components of the personal device 101 are similarly connected, in order to provide wireless communication functionality and receive user interrupts, inputs and configuration data.

Accordingly, user input may be received from a data input interface 1108, which for the smartphone 101 is a keypad with a limited number of multi-functional keys and/or a capacitive or resistive touch screen feature of the display unit 1109. Further input data may be received as analogue sound wave data by a microphone 1110, digital image data by a digital camera lens 1111 and digital data via a Universal Serial Bus (USB) 1112. Processed data is output as one or both of display data output to the display unit 1109 and audio data output to a speaker unit 1113. Power is supplied to the above components by the electrical circuit 1114 of the device 101, which is interfaced with an internal battery module 1115 that may itself be recharged on an ad hoc basis by an electrical converter 1116.
s

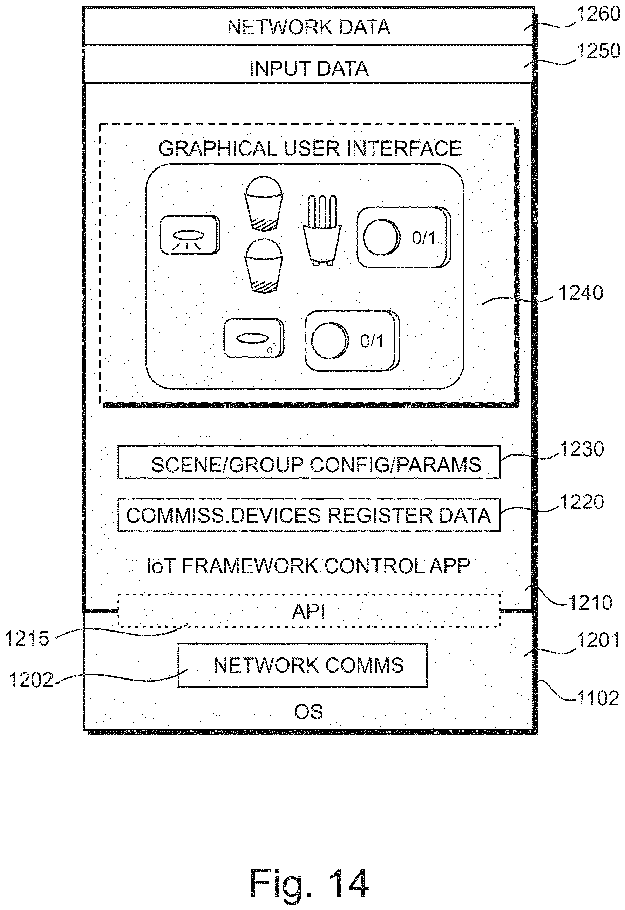

Figure 14 illustrates the contents of the memory 1102 of the personal device 101 of Figures 1 and 13 at runtime within the networked environment shown in any of Figures 1 to 12, including an operating system, a set of instructions and a graphical user interface instantiated by the set of instructions, for interacting with the home automation systems 100_{1,2} of Figure 1 within the interoperability framework 300 of the invention.

The smartphone device 101 includes an OS 1201 which, if the smartphone is for instance an iPhone® mobile phone handset manufactured by Apple® Inc. of Sunnyvale, USA, is iOS® likewise distributed by Apple® Inc. or, if the device 101₁₋₃ is for instance an Galaxy® mobile phone handset manufactured by Samsung® Electronics Co., Ltd of Suwon, Republic of Korea, is Android® distributed by Google® Inc. Each example OS 1201 includes communication subroutines 1202 to configure the data processing terminal 101 for bilateral network communication via the modem 1103 and the WNIC module 1106. The OS 1201 also includes input subroutines for reading and processing input data variously consisting of user direct input to the keypad 1108 and to the touch screen interface 1109, image data captured by the CCD 1111 and audio data supplied by the DAC 1104 after processing input from the microphone 1110.

The data processing application 1210 embodies a user application for controlling networked devices 104₁₋₇ commissioned onto the interoperability framewrok 300, wherein the application 1210 runs locally on the user device 101 and interfaces over the wireless network connection 103 with the gateway device 102,300 and the set of instructions 505 thereof through a relevant API 1205. The application 1210 may be distributed by the gateway 102, 300, or through the additional intermediary of a further server (not shown) configured as an iOS® or Android® app repository, of which the Apple Store® and Google Play® are respective examples.

The user application 1210 comprises a data structure 1220 populated with data downloaded from the commissioned devices register 336 hosted by the gateway 102, 300, wherein the data is representative of each network device 104₁₋₇ and its respective resources within the unified interoperability framework 300.

The user application 1210 also comprises a data structure 1230 populated with data downloaded from the scene/group management register 335 hosted by the gateway 102, wherein the data is representative of the thematic, logical and/or functional associations of networked devices 104_{N} within the unified interoperability framework 300.

The user application 1210 further comprises a graphical user interface ("*GUI*") 1240 output by the application to the VDU 1109, within which respective graphical images, symbols or other icons are rendered for each network device 104₁₋₇ available for remote configuration and/or commanding and/or association in a scene/group within the unified interoperability framework 300 at the user device 101, wherein such graphical images, symbols or other icons are user-selectable through the input interface of the VDU 1109 and configuring parameters, commands and/or associations may be input in respect of each selection by a user. The user input is transmitted by the user application 1210 to the gateway application 505 and processed by the discovery and translation modules 510, 530 with the aid of the device information base 520 according to the principles described hereinbefore, transparently of the respective network protocols 340_{1-N} of the heterogeneous devices and thus not requiring several distinct sets of network protocol-respective user applications.

Further data in the memory 1102 may comprise local data 1250 or network data 1260, some or all of which may be processed by the user application 1210 and sub-routines thereof, or by or for other third-party set(s) of instructions (s) (not shown) being processed in parallel with the said user application 1210.

Accordingly the interoperability framework 300 of the invention advantageously provides for the on-boarding and commissioning of an IoT device in a plurality of networks, and eliminates existing silos without requiring software changes, nor rewriting applications. Interoperation among smart home communication protocols in the new framework is made seamless, wherein device bindings can be instantiated, and maintained, among devices operating under distinct and homogeneous network standards, regardless of their respective communication technologies and protocols. Still more advantageously, the interoperability framework does not require additional software on legacy IoT devices for implementing interoperability, since the framework can integrate with existing HASs without requiring any change to the existing HASs, and developers need not learn a new API: a single application, 1210 in the example embodiment described, can be used to control and manage devices manufactured by different vendors.

In the specification the terms "comprise, comprises, comprised and comprising" or any variation thereof and the terms include, includes, included and including" or any variation thereof are considered to be totally interchangeable and they should all be afforded the widest possible interpretation and vice versa. The invention is not limited to the embodiments hereinbefore described but may be varied in both construction and detail.

## Claims

1. A gateway device for enabling interoperability between networked devices operating under heterogeneous network protocols, comprising:
at least one memory that stores computer executable instructions ; and
at least one processor configured to access the at least one memory, wherein the at least one processor is configured to execute the computer executable instructions to instantiate:
a networked device discovery and registration module ;
a device information base ; and
a translation module processing a plurality of mapping registers, including at least a universal resource identifier (URI) mapping register for each network protocol supported by the gateway device ;
wherein the networked device discovery and registration module configures the gateway device to:
instruct a communication stack to broadcast a discovery request message under its respective network protocol;
receive network protocol-respective resource data from one or more networked device in reply to the discovery request message ;
process each received resource data into a network protocol-respective URI format; and
store each processed URI in the device information base; and
wherein the translation module configures the gateway device to:
map the network protocol-respective URI of a discovered resource to a URI format of each further network protocol supported by the gateway device and store each such format mapping in its network protocol-respective URI mapping register; and
translate heterogeneous data communications between networked devices by mapping source device application layer messages to destination device application layer messages according to the device information base and the URI mapping registers.

2. A gateway device according to claim 1, wherein the networked device discovery and registration module further configures the gateway device to process network protocol-respective resource data that is received in a registration request message sent by a networked device, into a network protocol-respective URI format and store the processed URI in the device information base.

3. A gateway device according to claim 1 or 2, wherein the networked device discovery and registration module further configures the gateway device to receive a discovery request message sent by a networked device, to match the network protocol of the request against the device information base and network protocol-respective URI mapping register, and to answer the discovery request with matched resource data.

4. A gateway device according to any of claims 1 to 3, wherein the discovery request message is either a general-discovery message for discovering any resource operating under any network protocol, or a filtered-discovery message for discovering a specific resource operating under any network protocol or any resource operating under a specific network protocol.

5. A gateway device according to any of claims 1 to 4, wherein the network protocol-respective resource data of each discovered resource comprises, and the device information base stores, one or more selected from the list comprising attributes, interfaces, communication standard, network layer address, application end point/port number, transport protocol, application layer protocol, access rights and security policies.

6. A gateway device according to any of claims 1 to 5, wherein the translation module further configures the gateway device to
translate a first data communication received from a first network device corresponding to a first resource request message, into a second data communication corresponding to a second resource request message compatible with the respective network protocol of a second network device supplying the queried resource ;
translate a third data communication received from the second network device corresponding to a first resource reply message, into a fourth data communication corresponding to a second resource reply message compatible with the respective network protocol of the first network device ; and
store a map comprising device information base data and URI mapping registers data processed to perform the translations.

7. A gateway device according to claim 6, wherein the first data communication received is a resource state request message, the third data communication is a resource state reply message, and the plurality of mapping registers further comprises an observer register in which the translation module stores the map; or
wherein the first data communication received is a confirmable request message, the third data communication is a resource acknowledgement message, and the plurality of mapping registers further comprises an confirmable request register in which the translation module stores the map.

8. A gateway device according to any of claims 1 to 7, wherein the networked devices are home automation devices.

9. A gateway device according to any of claims 1 to 8, wherein a generic URI format to identify a resource is iof://technology-identifier:network-layer-address:end-point/resource-type/resource-name.

10. A method for enabling interoperability between networked devices operating under heterogeneous network protocols, comprising the computer implemented steps of:
instantiating a device information base and a plurality of mapping registers, including at least a universal resource identifier (URI) mapping register for each network protocol supported by a gateway device, at the gateway device;
instructing a communication stack to broadcast a discovery request message under its respective network protocol with the gateway device ;
receiving network protocol-respective resource data from one or more networked device in reply to the discovery request message ;
processing each received resource data into a network protocol-respective URI format;
storing each processed URI in the device information base at the gateway device ;
mapping the network protocol-respective URI of a discovered resource to a URI format of each further network protocol supported by the gateway device and storing each such format mapping in its network protocol-respective URI mapping register at the gateway device ; and
translating heterogeneous data communications between networked devices by mapping source device application layer messages to destination device application layer messages according to the device information base and the URI mapping registers at the gateway device.

11. A method according to claim 10, comprising the further steps of
processing network protocol-respective resource data that is received in a registration request message sent by a networked device, into a network protocol-respective URI format and storing same in the device information base; and/or
receiving a discovery request message sent by a networked device, matching the network protocol of the request against the device information base and network protocol-respective URI mapping register, and answering the discovery request with matched resource data.

12. A method according claim 10 or 11, comprising the further steps of
translating a first data communication received from a first network device corresponding to a first resource request message, into a second data communication corresponding to a second resource request message compatible with the respective network protocol of a second network device supplying the queried resource ;
translating a third data communication received from the second network device corresponding to a first resource reply message, into a fourth data communication corresponding to a second resource reply message compatible with the respective network protocol of the first network device ; and
storing a map comprising device information base data and URI mapping registers data processed to perform the translations.

13. A method according claim 13, wherein
the first data communication received is a resource state request message, the third data communication is a resource state reply message, and the plurality of mapping registers further comprises an observer register in which the translation module stores the map; and/or
the first data communication received is a confirmable request message, the third data communication is a resource acknowledgement message, and the plurality of mapping registers further comprises an confirmable request register in which the translation module stores the map.

14. A method according to claim 13, wherein the first data communication received is a resource state request message, the third data communication is a resource state reply message, and the plurality of mapping registers further comprises an observer register in which the translation module stores the map; or
wherein the first data communication received is a confirmable request message, the third data communication is a resource acknowledgement message, and the plurality of mapping registers further comprises an confirmable request register in which the translation module stores the map.

15. A non-transitory computer-readable medium storing computer-executable instructions that, when executed by at least one processor, configure the at least one processor to perform operations comprising:
instantiating a device information base and a plurality of mapping registers, including at least a universal resource identifier (URI) mapping register for each network protocol supported by a gateway device, at the gateway device;
instructing a communication stack to broadcast a discovery request message under its respective network protocol with the gateway device ;
receiving network protocol-respective resource data from one or more networked device in reply to the discovery request message ;
processing each received resource data into a network protocol-respective URI format;
storing each processed URI in the device information base at the gateway device ;
mapping the network protocol-respective URI of a discovered resource to a URI format of each further network protocol supported by the gateway device and storing each such format mapping in its network protocol-respective URI mapping register at the gateway device ; and
translating heterogeneous data communications between networked devices by mapping source device application layer messages to destination device application layer messages according to the device information base and the URI mapping registers at the gateway device.
